# EUROPÄISCHE PATENTSCHRIFT

(11) **EP 2 527 112 B1**
(45) Veröffentlichungstag und Bekanntmachung des Hinweises auf die Patenterteilung: **08.09.2021**
(21) Anmeldenummer: 12168644.8
(22) Anmeldetag: 21.05.2012
(51) Int. Cl.: B27M 1/08, B23Q 7/00, B23Q 7/04, B23Q 7/10

(54) **Bearbeitungsvorrichtung**
Processing device
Dispositif de traitement

(30) Priorität: 27.05.2011 DE 102011076595
(43) Veröffentlichungstag der Anmeldung: 28.11.2012
(73) Patentinhaber: HOMAG GmbH, 72296 Schopfloch (DE)
(72) Erfinder: Sturm, Christian, 72172 Sulz/Neckar (DE); Schmieder, Volker, 72116 Mössingen (DE); Zeller, Robert, 72175 Dornhan (DE); Gringel, Martin, 72479 Straßberg (DE); Fetscher, Dr. Joachim, 72296 Schopfloch (DE)
(74) Vertreter: Hoffmann Eitle

(56) Entgegenhaltungen:
- EP-A1- 2 098 344
- EP-A1- 2 436 477
- DE-A1- 4 439 603
- DE-A1- 19 602 934
- DE-A1-102010 001 724
- DE-A1-102010 029 564
- DE-T2- 3 887 405
- FR-A1- 2 584 964
- US-A1- 2005 205 390

## Beschreibung

### Technisches Gebiet

Die vorliegende Erfindung betrifft eine Bearbeitungsvorrichtung. Das Dokument DE 44 39 603 A1 ist der nächstliegende Stand der Technik.

Mit einer derartigen Bearbeitungsvorrichtung ist es möglich, die Effizienz bei der Bearbeitung von Werkstücken bzw. beim Zu- und Abführen der Werkstücke aus der Bearbeitungsvorrichtung zu verbessern.

### Stand der Technik

Aus der EP 2 098 344 A1 ist ein Verfahren und eine Vorrichtung zur maschinellen Verarbeitung von Holzkomponenten oder ähnlichem bekannt. Bei dieser Vorrichtung werden zu bearbeitende Komponenten in einer Ablageeinrichtung in einer Vielzahl an sich in senkrechter Richtung überlappenden Ablageebenen gelagert. Von dort werden die Komponenten zur Bearbeitung mittels einer in einer senkrechten Richtung beweglichen Hubeinrichtung hin zu einer Bearbeitungsstation überführt, die Komponenten werden dabei mittels beweglicher Bandförderer der Ablageebenen hin zu der Hubeinrichtung bewegt und nach der Bearbeitung wieder auf den Bandförderern der Ablageebenen abgelegt.

Nachteil dieses Konzeptes ist, dass die Vorrichtung der oben genannten Schrift eine aufwändige, mit einer Vielzahl an Bandförderern versehene Ablageeinrichtung erfordert. Werden mehrere Ablageeinrichtungen an der Maschine angeordnet oder befinden sich mehrere Ablageeinrichtungen der Vorrichtung vorgelagert in einer Warteposition, so ist es notwendig mehrere zum Teil wartungsintensive und teure Ablageeinrichtungen oder Teilespeicher zur Verfügung zu stellen.

Als weitere Schrift ist die FR 2 584 963A1, bzw. die parallele Patentanmeldung DE 36 24 415 A1 bekannt. Aus letzterer geht eine automatische Beschickungsvorrichtung hervor, die eine Lagervorrichtung zur Unterbringung von Paletten umfasst, die Gegenstände, wie beispielsweise Montageteile, austauschbare Werkzeuge o.ä. enthalten.

Als weitere Schrift ist die US 2005/205 390 A1 zu nennen.

### Darstellung der Erfindung

Der Erfindung liegt die Aufgabe zugrunde, eine Bearbeitungsvorrichtung zu schaffen, die die bekannten Probleme aus dem Stand der Technik löst und ferner dazu geeignet ist, eine Bearbeitungseinrichtung effizient mit Werkstücken zu beschicken und bevorzugt aus dieser wieder zu entnehmen, um so den Werkstück- bzw. Teiledurchsatz der Bearbeitungsvorrichtung zu optimieren.

Die Lösung der Aufgabe erfolgt durch den Gegenstand des Anspruchs 1. Bevorzugte Ausgestaltungen der erfindungsgemäßen Bearbeitungsvorrichtung ergeben sich aus den Unteransprüchen. Der Erfindung liegt der Gedanke zugrunde, die Elemente einer Bearbeitungsvorrichtung geschickt einzusetzen, um so das Beschicken der Bearbeitungsvorrichtung effizient durchführen zu können.

Demgemäß umfasst die Bearbeitungsvorrichtung zum Bearbeiten von bevorzugt länglichen Werkstücken, die vorzugsweise zumindest teilweise aus Holz, Holzwerkstoffen, Metall, Kunststoff oder dergleichen bestehen, die Merkmale des unabhängigen Anspruchs 1.
Der Begriff "Umsetzereinheit" bezeichnet dabei jegliche Art von Einheit, die eingerichtet ist Werkstücke umzusetzen, also Werkstücke von einer ersten Position aufzunehmen und in einer zweiten Position abzusetzen und von dort ggf. wieder aufzunehmen. Erfindungsgemäß weist die Umsetzereinheit eine Riemenfördereinheit, einen Bandförderer und/oder einen Linearförderer auf. Der Begriff "Werkstückspeichereinrichtung" bezeichnet dabei eine Einrichtung, die zum Speichern von Werkstücken geeignet ist. Mögliche Beispiele einer solchen Werkstückspeichereinrichtung folgen im Zuge der Beschreibung. Mit der erfindungsgemäßen Bearbeitungsvorrichtung ist es bedingt dadurch, dass die Umsetzereinheit sowohl in vertikaler Richtung als auch in einer zu der vertikalen Richtung senkrechten Richtung (also eine Richtung in der horizontalen Ebene) verstellbar bzw. verfahrbar ist, möglich, Werkstücke auch zwischen der Werkstückspeichereinrichtung und der Bearbeitungsvorrichtung hin und her zu transportieren. Es ist daher möglich, sowohl in der Werkstückspeichereinrichtung als auch in der Bearbeitungseinrichtung auf aufwendige Einrichtungen, wie beispielsweise Riemen, Bandförderer und dergleichen zu verzichten. In der Regel werden bei Bearbeitungsvorrichtungen eine Vielzahl von Werkstückspeichereinrichtungen vorgehalten, sodass nach dem Abarbeiten der Werkstücke aus einer Werkstückspeichereinrichtung die nächste Werkstückspeichereinrichtung an der Bearbeitungsvorrichtung angeordnet werden kann, sodass möglichst zeitnah mit der Bearbeitung von Werkstücken aus dieser folgenden Werkstückspeichereinrichtung begonnen werden kann. Somit ist es bedingt durch den Umstand, dass es mit der erfindungsgemäßen Bearbeitungsvorrichtung möglich ist, sowohl die Werkstückspeichereinrichtung als auch die Bearbeitungseinrichtung einfacher auszuführen, möglich, insgesamt eine kostengünstige Bearbeitungsvorrichtung zur Verfügung zu stellen, die effizient eingesetzt werden kann. Ferner kann die Umsetzereinheit besonders vorteilhaft dazu verwendet werden, um die Bearbeitungseinrichtung direkt mit Werkstücken zu beschicken und die Werkstücke aus dieser zu entnehmen.
Dabei kann die Werkstückspeichereinrichtung gemäß einer Ausführungsform im Übergabebereich mit stationären Ablageelementen insbesondere mit Sprossen, Riemen und/oder Blechen versehen sein. Auf diese Weise ist es möglich, mit der Umsetzereinheit durch Anheben der auf einer Sprosse oder dergleichen abgelegten Werkstücke diese aus der Werkstückspeichereinrichtung heraus zu transportieren und wieder in der Werkstückspeichereinrichtung abzulegen. Somit können sowohl eine günstige Werkstückspeichereinrichtung als auch ein effizientes Ausfördern bzw. Einbringen der Werkstücke aus bzw. in die Werkstückspeichereinrichtung umgesetzt werden.

Die Werkstückspeichereinrichtung ist ein Hordenwagen und/oder eine bevorzugt verfahrbare Palette (beispielsweise eine Euro-Palette auf einer verfahrbaren Aufnahme). Auf diese Weise ist es besonders vorteilhaft möglich, Werkstücke effizient aus der Werkstückspeichereinrichtung zu entnehmen und wieder in diese einzubringen. Gemäß einer weiteren bevorzugten Ausführungsform ist an der Bearbeitungsvorrichtung genau eine Werkstückspeichereinrichtung in Verbindung mit einer Umsetzereinheit anordenbar. Auf diese Weise ist es möglich, pro vollwertigem Bearbeitungsstrang genau eine Umsetzereinheit vorzusehen, die für den Werkstücktransport zwischen der jeweiligen Werkstückspeichereinrichtung und der Bearbeitungsvorrichtung zuständig ist. Es ist daher besonders vorteilhaft möglich, aus genau einer Werkstückspeichereinrichtung mittels jeweils einer Umsetzereinheit Werkstücke zu entnehmen und die Werkstückspeichereinrichtung wieder mittels dieser Umsetzereinheit mit Werkstücken zu beschicken.

Gemäß einer weiteren besonders bevorzugten Ausführungsform sind in der Werkstückspeichereinrichtung zu bearbeitende und/oder bearbeitete Werkstücke gespeichert. Auf diese Weise ist es möglich, eine mit einer Vielzahl an zu bearbeitenden Werkstücken versehene Werkstückspeichereinrichtung an der Bearbeitungsvorrichtung anzuordnen und die Werkstücke, die in der Werkstückspeichereinrichtung gespeichert sind, nacheinander zu bearbeiten und nach dem Bearbeiten jeweils wieder in der Werkstückspeichereinrichtung abzulegen. Es ist daher nicht notwendig, dass ein Bediener stets bei der Bearbeitungsvorrichtung anwesend ist, um diese mit weiteren Werkstücken zu beschicken, sondern es ist möglich, dass die Werkstückspeichereinrichtung erst nach dem vollständigen Abarbeiten der in ihr gespeicherten Werkstücke mit neuen Werkstücken versehen wird oder eine neue bereits mit neuen Werkstücken versehene Werkstückspeichereinrichtung an der Bearbeitungsvorrichtung (ggf. automatisch) angeordnet wird.

Die Bearbeitungsvorrichtung kann dabei mit einer Erfassungseinrichtung, insbesondere mit einer Lichtschranke, an einer Ausgangsseite der Werkstückspeichereinrichtung und/oder an der Umsetzereinheit versehen sein, um die Anzahl und/oder Lage der auf der Umsetzereinheit angeordneten Werkstücke zu erfassen. Dadurch ist es möglich, wenn mehrere Werkstücke auf einem stationären Ablageelement der Werkstückspeichereinrichtung angeordnet sind, die Lage und/oder Anzahl der Werkstücke zu erfassen, um so beispielsweise eine Vereinzelung der Werkstücke bzw. eine größenabhängige Bearbeitung der Werkstücke durchzuführen.

Die Umsetzereinheit kann zusätzlich auch mit einer Bearbeitungseinrichtung versehen sein, beispielsweise mit einer Kappschere, einer Schneideinrichtung, einer Schleifeinrichtung und so weiter. Auf diese Weise ist es besonders vorteilhaft möglich, während des Umsetzens mit der Umsetzereinheit bereits eine Bearbeitung an den Werkstücken vorzunehmen. Dadurch wird die Effizienz der Bearbeitungsvorrichtung weiter erhöht. Alternativ oder zusätzlich kann an der Umsetzereinheit eine Markiereinrichtung, wie ein Barcodeschreibegerät, und/oder eine Identifiziereinrichtung, wie ein Barcodelesegerät, vorgesehen sein. Somit ist es möglich Werkstücke vor oder nach der Bearbeitung kenntlich zu machen oder zu identifizieren.

Gemäß einer weiteren besonders bevorzugten Ausführung ist ein der Bearbeitungseinrichtung vorgelagerter Werkstückzwischenspeicher vorgesehen, auf welchen die Umsetzereinheit die Werkstücke transportiert und von welchem die Umsetzereinheit die bearbeitenden Werkstücke wieder zu der Werkstückspeichereinrichtung zurück transportiert. Mittels des Werkstückzwischenspeichers ist es möglich, sowohl von der Bearbeitungseinrichtung bearbeitete Werkstücke als auch von der Bearbeitungseinrichtung noch zu bearbeitende Werkstücke auf diesem Werkstückzwischenspeicher anzuordnen. Es kann daher dem Umstand Rechnung getragen werden, dass der Transport zwischen der Werkstückspeichereinrichtung und dem Werkstückzwischenspeicher sowie die Bearbeitung in der Bearbeitungseinrichtung unterschiedlich viel Zeit veranschlagen, sodass bedingt durch den Werkstückzwischenspeicher sowohl die Bearbeitungseinrichtung als auch die Werkstückspeichereinrichtung effizient eingesetzt werden können.

Dabei kann eine Überführungseinrichtung vorgesehen sein, um die Werkstücke zwischen der Bearbeitungseinrichtung und dem Werkstückzwischenspeicher hin und bevorzugt zurück zu transportieren. Diese Überführungseinrichtung kann dabei unterschiedlich ausgebildet sein, insofern sie in der Lage ist, Werkstücke aufzunehmen und zu transportieren. Es ist ebenfalls denkbar, die Überführungseinrichtung in Form einer Riemenfördereinheit, eines Bandförderers, eines Linearförderers und/oder eines horizontal verfahrbaren Elements auszubilden.

Gemäß einer weiteren besonders bevorzugten Ausführungsform ist der Werkstückzwischenspeicher mit einer Ausschleuseinrichtung zum Ausschleusen von Werkstücken versehen. Auf diese Weise ist es möglich, Werkstücke, die sich beispielsweise nach einer Überprüfung mittels der Erfassungseinrichtung als fehlerhaft erwiesen haben, vor oder nach der Bearbeitung durch die Bearbeitungseinrichtung auszuschleusen. Zusätzlich ist es möglich, bearbeitete Werkstücke, die nicht mehr gemeinsam mit den übrigen bearbeiteten Werkstücken in der Werkstückspeichereinrichtung nach dem Bearbeiten gespeichert werden sollen, vorab auszuschleusen und unmittelbar eine weitere Bearbeitung und dergleichen an ihnen vorzunehmen bzw. diese einer Qualitätssicherungsmaßnahme zu unterziehen.

Die erfindungsgemäßen Vorteile äußern sich vor allem, wenn die Bearbeitungsvorrichtung gemäß einer weiteren Ausführungsform eine Stationärmaschine, insbesondere eine CNC-Maschine ist, da bei diesen Bearbeitungsvorrichtungen die Werkstücke "im gleichen Strang" zurückkommen, d.h., die Werkstücke werden mittels der Umsetzereinheit von der Werkstückspeichereinrichtung entnommen und nach der Bearbeitung mittels der Bearbeitungseinrichtung wieder mittels der Umsetzereinheit in der Werkstückspeichereinrichtung angeordnet.

Gemäß einer weiteren bevorzugten Ausführungsform ist die Werkstückspeichereinrichtung verfahrbar und kann mittels einer Fördereinrichtung automatisiert an der Bearbeitungsvorrichtung angeordnet werden und weggefahren werden. Auf diese Weise ist es besonders vorteilhaft möglich, die Bearbeitungsvorrichtung automatisiert mit Werkstückspeichereinrichtungen zu versehen. Mögliche Beispiele einer Fördereinrichtung sind ein Förderband, eine Förderkette oder dergleichen.

Gemäß einer bevorzugten Ausführungsform der vorliegenden Erfindung weist die Bearbeitungsvorrichtung, insbesondere die Werkstückspeichereinrichtung, eine Sensoreinheit auf, mit welcher Sensoreinheit Werkstücke in einer Ebene der Werkstückspeichereinrichtung erfasst und insbesondere identifiziert werden können. Auf diese Weise können insbesondere einzelne Werkstücke in jeweiligen Ebenen der Werkstückspeichereinrichtung erkannt und/oder identifiziert werden. Diese Information kann von der Bearbeitungsvorrichtung genutzt werden, um jeweils das passende Fertigungsprogramm zu dem ermittelten Werkstück zu laden und/oder starten. Auf diese Weise kann eine besonders effiziente Nutzung der Bearbeitungsvorrichtung erreicht werden.

Bevorzugt ist die Bearbeitungsvorrichtung mit einer Ausschleuseinheit zum Ausschleusen von Werkstücken von der Umsetzereinheit versehen. Auf diese Weise können Werkstücke zügig weitergeleitet werden.

Ein bevorzugtes Anwendungsgebiet der erfindungsgemäßen Bearbeitungsvorrichtung liegt im Bereich der Fertigung von Fenster- und Türteilen. Insbesondere lassen sich mit der Bearbeitungsvorrichtung und Ihrer Umsetzereinheit längliche oder stabförmige Werkstücke fördern und bearbeiten, auch wenn diese Möglichkeiten nicht einschränkend zu betrachten sind.

### Kurze Beschreibung der Zeichnungen

Fig. 1 zeigt eine schematische Ansicht einer erfindungsgemäßen Bearbeitungsvorrichtung gemäß einer ersten Ausführungsform,
Fig. 2 zeigt eine perspektivische Ansicht einer erfindungsgemäßen Bearbeitungsvorrichtung mit einer Ausschleuseinrichtung gemäß einer zweiten Ausführungsform und
Fig. 3a - c zeigt einen Ablauf zum Vereinzeln von Werkstücken mittels einer Erfassungseinrichtung.

### Ausführliche Beschreibung bevorzugter Ausführungsformen der Erfindung

### Im Folgenden wird eine erfindungsgemäße

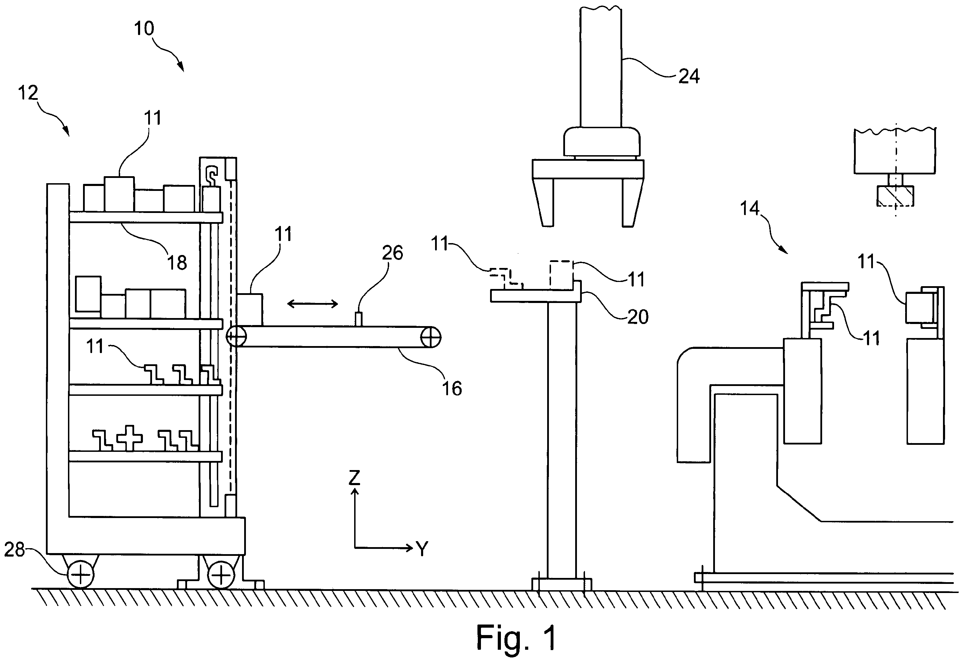

Bearbeitungsvorrichtung unter Bezugnahme auf die Figuren 1 - 3 anhand von zwei rein beispielhaften Ausführungsformen beschrieben.

### Dabei zeigt Fig. 1 eine erfindungsgemäße

Bearbeitungsvorrichtung 10. Die Bearbeitungsvorrichtung 10 umfasst eine Bearbeitungseinrichtung 14, mit welcher Werkstücke 11 bearbeitet werden können. Dabei ist jede Form der Werkstückbearbeitung, beispielsweise bohren, fräsen, Kanten anleimen und so weiter mittels der Bearbeitungseinrichtung 14 möglich.

### An der Bearbeitungseinrichtung 14 ist eine

Werkstückspeichereinrichtung 12 angeordnet. Die Werkstückspeichereinrichtung kann stationär und/oder verfahrbar sein. In dem in Fig. 1 gezeigten Ausführungsbeispiel ist eine mittels Rollen 28 bewegliche Werkstückspeichereinrichtung 12 gezeigt. In der Werkstückspeichereinrichtung können die Werkstücke 11 auf stationären Ablageelementen 18, wie Sprossen oder dergleichen, angeordnet werden. In Fig. 1 befinden sich auf den oberen beiden Ablageelementen 18 noch zu bearbeitende Werkstücke 11 und auf den unteren beiden Ablageelementen 18 befinden sich bereits bearbeitete Werkstücke 11, wobei eine andere Anordnung der bearbeiteten und der noch zu bearbeitenden Werkstücke 11 ebenfalls möglich ist.

Mittels einer in sowohl der vertikalen Richtung als auch in einer zu der vertikalen Richtung senkrechten Richtung verfahrbaren Umsetzereinheit 16 werden die zu bearbeitenden Werkstücke 11 aus der Werkstückspeichereinrichtung entnommen und zu der Bearbeitungseinrichtung 14 transportiert, um dort bearbeitet zu werden. Ein Rücktransport der bearbeiteten Werkstücke mittels der Umsetzeinheit 16 ist ebenfalls möglich. Die Umsetzeinheit 16 kann dabei beispielsweise in der Form einer Riemenfördereinheit, eines Bandförderers und/oder eines Linearförderers ausgebildet sein und/oder ein horizontal verfahrbares Element aufweisen. Die Umsetzeinheit 16 ist dabei so gestaltet, dass sie in vertikaler Richtung zwischen den stationären Ablageelementen 18 verfahrbar ist und so, wenn sie in die gewünschte Ebene der Werkstückspeichereinrichtung 12 eintaucht, die Werkstücke aus der jeweiligen Ebene zur Bearbeitung entnehmen kann, bzw. nach der Bearbeitung in der jeweiligen Ebene ablegen kann. Um Werkstücke 11 von beispielsweise einem der beiden oberen stationären Ablageelemente 18 zu entnehmen, wird die Umsetzeinheit 16 zunächst in der zu der vertikalen Richtung senkrechten Richtung (also einer horizontalen Richtung) verfahren und hebt anschließend von unten kommend die Werkstücke von einem der stationären Ablageelemente 18 an. Mit Hilfe der Riemenförderereinheit des Bandförderers, des Linearförderers und/oder des horizontal verfahrbaren Elements der Umsetzereinheit 16 wird das bzw. die gewünschten Werkstücke 11 anschließend aus der Werkstückspeichereinrichtung 12 entnommen und in der horizontalen Richtung hin zu der Bearbeitungseinrichtung 14 verfahren. Das Ablegen der bearbeiteten Werkstücke 11 erfolgt in umgekehrter Reihenfolge.

An einer Ausgangsseite der Werkstückspeichereinrichtung 12 oder an der Umsetzeinheit 16 kann eine Erfassungseinrichtung 26 (beispielsweise in Form einer Lichtschranke) vorgesehen sein. Mittels dieser Erfassungseinrichtung ist es möglich, die Anzahl und/oder die Lage der auf der Umsetzeinheit 16 und/oder der auf einem stationären Ablageelement 18 der Werkstückspeichereinrichtung 12 angeordneten Werkstücke 11 zu erfassen und ggf. die Werkstücke 11 zu vereinzeln.

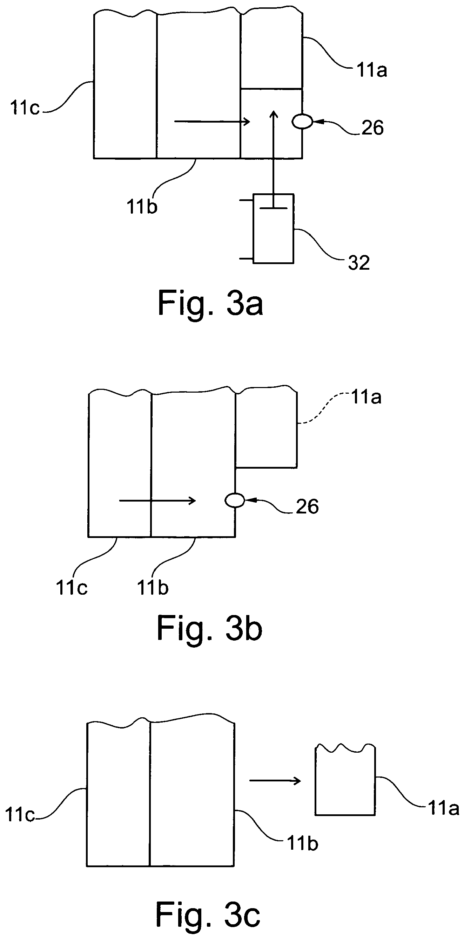

Die Figuren 3a - 3c zeigen einen Ablauf beim Erfassen bzw. Vereinzeln der Werkstücke 11. Zunächst wird mit der Erfassungseinrichtung 26 die Position erfasst, an welcher das Werkstück 11a auf die Erfassungseinrichtung 26 trifft. Dies kann beispielsweise durch Verfahren der Werkstücke 11a - 11c mittels der Riemenfördereinheit der Umsetzeinheit (16) erfolgen. Anschließend wird das erfasste Werkstück mittels einer Schiebereinheit 32, bei welcher die Breite des Schiebers geringer sein muss als die geringste zu bearbeitende Werkstückbreite, zur Seite geschoben und die aneinander anliegende Werkstücke 11a - 11c werden in der horizontalen Richtung mittels der Riemenfördereinheit verfahren, bis die Erfassungseinheit 26, welche eine Erfassung in der vertikalen Richtung durchführt, das nächste Werkstück 11b erfasst (siehe Fig. 3b). Diese Position wird gespeichert und die auf der Umsetzereinheit 16 angeordneten Werkstücke werden wieder auf dem stationären Ablageelement 18 der Werkstückspeichereinrichtung 12 angeordnet und derart von der Umsetzereinheit 16 angehoben, dass ein Abstand zwischen dem Werkstück 11a und den Werkstücken 11b und 11c entsteht (siehe Fig. 3c). Um weitere Werkstücke zu vereinzeln wird der Ablauf wiederholt. Ein weiterer Schieber kann vorgesehen sein, um die zur Seite geschobenen Werkstücke 11 in der Gegenrichtung auszurichten.

Mit der in Fig. 1 gezeigten Umsetzeinheit ist es möglich, die Werkstücke 11 direkt an der Bearbeitungseinrichtung 14 zur Bearbeitung anzuordnen. Alternativ können die Werkstücke 11 mittels der Umsetzeinheit 16 auf einem Zwischenspeicher 20 angeordnet werden und von diesem Zwischenspeicher 20 mittels einer Überführungseinrichtung 24 der Bearbeitungseinrichtung 14 zugeführt werden und von dieser wieder abtransportiert werden.

Der Werkstückzwischenspeicher kann dabei beispielsweise in Form von einem Tisch vorgesehen sein. Andere Ausgestaltungen sind ebenfalls möglich (siehe Ausführungsform 2).

An einer Bearbeitungseinrichtung 14 können eine Werkstückspeichereinrichtung 12 und eine Umsetzeinheit 16 vorgesehen sein. Alternativ können mehrere Umsatzeinheiten 16 sowie Werkstückspeichereinrichtungen 12 vorgesehen sein, wobei eine besonders vorteilhafte Bearbeitungseffizienz erreicht wird, wenn pro Umsetzeinheit 16 eine Werkstückspeichereinrichtung 12 vorgesehen ist.

Ferner kann die Umsetzeinheit 16 ebenfalls mit einer mitfahrenden oder stationären Bearbeitungseinrichtung versehen sein, die während des Umsetzens mittels der Umsetzereinheit 16 eine Bearbeitung durchführt. Hier kommen insbesondere kleinere im Zusammenhang mit der von der Bearbeitungseinrichtung 14 stehende Bearbeitungsvorgänge in Frage. Ferner kann die Umsetzereinheit 16 mit einer Identifiziereinrichtung und/oder einer Markiereinrichtung versehen sein, die dazu ausgebildet ist, einen Barcode, QR-Code oder dergleichen von einem Werkstück 11 einzulesen oder selbiges mit einem solchen zu versehen.

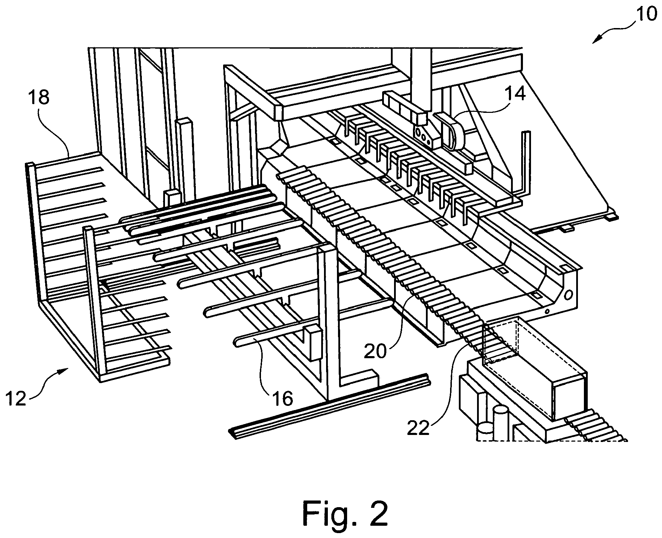

Im Folgenden wird unter Bezugnahme auf Fig. 2 eine zweite Ausführungsform einer erfindungsgemäßen Bearbeitungseinrichtung 10 beschrieben, wobei der Schwerpunkt auf Elemente gelegt wird, die sich von denen der ersten Ausführungsform unterscheiden.

Im Unterschied zur ersten Ausführungsform ist die Bearbeitungsvorrichtung 10 der zweiten Ausführungsform mit einem Werkstückzwischenspeicher 20 versehen, der mit einer Ausschleuseinrichtung 22 versehen ist, um Werkstücke vor oder nach dem Bearbeiten mittels der Bearbeitungseinrichtung 14 auszuschleusen. Auf diese Weise ist es möglich, Werkstücke während die Bearbeitungsvorrichtung 10 in Betrieb ist, auszuschleusen und beispielsweise eine andere Bearbeitung an diesen Werkstücken 11 vorzunehmen, ohne die Bearbeitungsvorrichtung 10 für das Ausschleusen der Werkstücke 11 anzuhalten.

Bei sowohl der Bearbeitungsvorrichtung 10 der ersten Ausführungsform als auch der zweiten Ausführungsform können die Werkstückspeichereinrichtungen 12 in Form von automatisch verfahrbaren Werkstückspeichereinrichtungen 12 vorgesehen sein, welche nach dem Bearbeiten der Werkstücke 11 automatisch (beispielsweise mittels eines Förderbandes, einer Förderkette oder dergleichen) von der Bearbeitungsvorrichtung 10 entfernt werden. Im Anschluss kann die nächste Werkstückspeichereinrichtung 12 der Bearbeitungsvorrichtung 10 zugeführt werden.

## Patentansprüche

1. Bearbeitungsvorrichtung (10) zum Bearbeiten von bevorzugt länglichen Werkstücken (11), die vorzugsweise zumindest teilweise aus Holz, Holzwerkstoffen, Metall, Kunststoff oder dergleichen bestehen, umfassend
- eine Werkstückspeichereinrichtung (12) zum Speichern von Werkstücken (11) in mehreren in vertikaler Richtung übereinander angeordneten Ebenen; und
- eine Bearbeitungseinrichtung (14) zum Bearbeiten der Werkstücke (11);
wobei die Werkstückspeichereinrichtung (12) eine verfahrbare Werkstückspeichereinrichtung ist, und
eine in der vertikalen Richtung und in zumindest einer zu der vertikalen Richtung senkrechten Richtung bewegbare Umsetzereinheit (16) vorgesehen ist, die eingerichtet ist Werkstücke (11) zwischen der Werkstückspeichereinrichtung (12) und der Bearbeitungseinrichtung hin und bevorzugt auch zurück zu transportieren,
wobei die Umsetzereinheit (16) eine Riemenfördereinheit, einen Bandförderer und/oder einen Linearförderer aufweist.

2. Bearbeitungsvorrichtung nach Anspruch 1, **dadurch gekennzeichnet, dass** die Werkstückspeichereinrichtung (12) im Übergabebereich mit stationären Ablageelementen (18), insbesondere mit Sprossen, Riemen und/oder Blechen, versehen ist.

3. Bearbeitungsvorrichtung nach einem der vorhergehenden Ansprüche, **dadurch gekennzeichnet, dass** die
Werkstückspeichereinrichtung (12) ein Hordenwagen, eine bevorzugt verfahrbare Palette und/oder ein stationäres Sammelregal, ist.

4. Bearbeitungsvorrichtung nach einem der vorhergehenden Ansprüche, **dadurch gekennzeichnet, dass** an der Bearbeitungsvorrichtung genau eine Werkstückspeichereinrichtung (12) in Verbindung mit einer Umsetzereinheit (16) anordenbar ist.

5. Bearbeitungsvorrichtung nach einem der vorhergehenden Ansprüche, **dadurch gekennzeichnet, dass** in der Werkstückspeichereinrichtung (12) zu bearbeitende und/oder bearbeitete Werkstücke (11) gespeichert sind.

6. Bearbeitungsvorrichtung nach einem der vorhergehenden Ansprüche, **dadurch gekennzeichnet, dass** eine Erfassungseinrichtung (26), insbesondere eine Lichtschranke, an einer Ausgangsseite der Werkstückspeichereinrichtung (12) und/oder an der Umsetzereinheit (16) vorgesehen ist, um die Anzahl und/oder Lage der auf der Umsetzereinheit (16) angeordneten Werkstücke (11) zu erfassen.

7. Bearbeitungsvorrichtung nach einem der vorhergehenden Ansprüche, **dadurch gekennzeichnet, dass** im Bereich der Umsetzereinheit (16) eine Bearbeitungseinrichtung und/oder eine Markiereinrichtung und/oder eine Identifiziereinrichtung vorgesehen ist.

8. Bearbeitungsvorrichtung nach einem der vorhergehenden Ansprüche, **dadurch gekennzeichnet, dass** ein der Bearbeitungseinrichtung (14) vorgelagerter Werkstückzwischenspeicher (20) vorgesehen ist.

9. Bearbeitungsvorrichtung nach Anspruch 8, **dadurch gekennzeichnet, dass** eine Überführungseinrichtung (24) vorgesehen ist, um die Werkstücke (11) zwischen der Bearbeitungseinrichtung (14) und dem Werkstückzwischenspeicher (20) hin und her zu transportieren.

10. Bearbeitungsvorrichtung nach einem der Ansprüche 8 oder 9, **dadurch gekennzeichnet, dass** der Werkstückzwischenspeicher (20) mit einer Ausschleuseinrichtung (22) zum Ausschleusen von Werkstücken (11) versehen ist.

11. Bearbeitungsvorrichtung nach einem der vorhergehenden Ansprüche, **dadurch gekennzeichnet, dass** die Bearbeitungsvorrichtung eine Stationärmaschine, insbesondere eine CNC-Maschine ist.

12. Bearbeitungsvorrichtung nach einem der vorhergehenden Ansprüche, **dadurch gekennzeichnet, dass** die Werkstückspeichereinrichtung (12) verfahrbar ist und mittels einer Fördereinrichtung automatisiert an der Bearbeitungsvorrichtung (10) anordenbar ist.

13. Bearbeitungsvorrichtung nach einem der vorhergehenden Ansprüche, **dadurch gekennzeichnet, dass** die Bearbeitungsvorrichtung, insbesondere die Werkstückspeichereinrichtung (12), eine Sensoreinheit aufweist, mit der Werkstücke (11) in einer Ebene der Werkstückspeichereinrichtung (12) erfasst und insbesondere identifiziert werden können.

14. Bearbeitungsvorrichtung gemäß einem vorangegangenen Ansprüche, **dadurch gekennzeichnet, dass** die Bearbeitungsvorrichtung mit einer Ausschleuseinheit zum Ausschleusen von Werkstücken von der Umsetzereinheit (16) versehen ist.

## Claims

1. Processing device (10) for processing preferably elongate workpieces (11) which preferably consist at least partly of wood, wood-based materials, metal, plastic or the like, comprising
- a workpiece storage device (12) for storing workpieces (11) on a plurality of levels arranged on top of each other in the vertical direction; and
- a processing apparatus (14) for processing the workpieces (11);
wherein the workpiece storage device (12) is a moveable workpiece storage device, and
a transfer unit (16), moveable in the vertical direction and in at least one direction perpendicular to the vertical direction, is provided which is configured to transport workpieces (11) between the workpiece storage device (12) and the processing apparatus and preferably also back again,
wherein the transfer unit (16) comprises a belt conveyor unit, a conveyor belt and/or a linear conveyor.

2. Processing device according to claim 1, **characterised in that** the workpiece storage device (12) is provided, in the transfer region, with stationary storage elements (18), in particular with rungs, belts and/or trays.

3. Processing device according to one of the preceding claims, **characterised in that** the workpiece storage device (12) is a trolley, a preferably moveable pallet and/or a stationary storage shelf.

4. Processing device according to one of the preceding claims, **characterised in that** exactly one workpiece storage device (12), in combination with a transfer unit (16), can be arranged on the processing device.

5. Processing device according to one of the preceding claims, **characterised in that** workpieces (11) which are to be processed and/or which have been processed are stored in the workpiece storage device (12).

6. Processing device according to one of the preceding claims, **characterised in that** a detection device (26), in particular a light barrier, is provided on an output side of the workpiece storage device (12) and/or on the transfer unit (16) in order to detect the number and/or location of the workpieces (11) arranged on the transfer unit (16).

7. Processing device according to one of the preceding claims, **characterised in that** a processing apparatus and/or a marking device and/or an identification device is provided in the region of the transfer unit (16).

8. Processing device according to one of the preceding claims, **characterised in that** an intermediate workpiece storage device (20) is provided upstream of the processing apparatus (14).

9. Processing device according to claim 8, **characterised in that** a transfer unit (24) is provided for transporting the workpieces (11) back and forth between the processing apparatus (14) and the intermediate workpiece storage device (20).

10. Processing device according to one of the claims 8 or 9, **characterised in that** the intermediate workpiece storage device (20) is provided with an ejector device (22) for ejecting workpieces (11).

11. Processing device according to one of the preceding claims, **characterised in that** the processing device is a stationary machine, in particular a CNC machine.

12. Processing device according to one of the preceding claims, **characterised in that** the workpiece storage device (12) is moveable and can be arranged on the processing device (10) in an automated manner by means of a conveyor system.

13. Processing device according to one of the preceding claims, **characterised in that** the processing device, in particular the workpiece storage device (12), has a sensor unit with which the workpieces (11) on one level of the workpiece storage device (12) can be detected and in particular identified.

14. Processing device according to one of the preceding claims, **characterised in that** the processing device is provided with an ejector unit for ejecting workpieces from the transfer unit (16).

## Revendications

1. Dispositif d'usinage (10) pour l'usinage de préférence de pièces oblongues (11), qui consistent de préférence au moins partiellement en du bois, des matériaux à bois, du métal, du plastique ou similaire, comprenant
- un appareil de stockage de pièces (12) pour stocker des pièces (11) dans plusieurs plans disposés les uns au-dessus des autres dans le sens vertical ; et
- un appareil d'usinage (14) pour usiner les pièces (11) ;
dans lequel l'appareil de stockage de pièces (12) est un appareil de stockage de pièces déplaçable, et
une unité de convertisseur (16) déplaçable dans la direction verticale et dans au moins une direction perpendiculaire à la direction verticale est prévue, qui est configurée pour transporter des pièces (11) entre l'appareil de stockage de pièces (12) et l'appareil d'usinage et de préférence également dans l'autre sens,
dans lequel l'unité de convertisseur (16) présente une unité de convoyeur à courroie, un convoyeur à bande et/ou un convoyeur linéaire.

2. Dispositif d'usinage selon la revendication 1, **caractérisé en ce que** l'appareil de stockage de pièces (12) est doté, dans la zone de transfert, d'éléments de dépôt stationnaires (18), en particulier de croisillons, de courroies et/ou de tôles.

3. Dispositif d'usinage selon l'une quelconque des revendications précédentes, **caractérisé en ce que** l'appareil de stockage de pièces (12) est un chariot à claies, une palette de préférence déplaçable et/ou une étagère de collecte stationnaire.

4. Dispositif d'usinage selon l'une quelconque des revendications précédentes, **caractérisé en ce qu'**exactement un appareil de stockage de pièces (12) peut être disposé sur le dispositif d'usinage en association avec une unité de convertisseur (16).

5. Dispositif d'usinage selon l'une quelconque des revendications précédentes, **caractérisé en ce que** les pièces à usiner et/ou usinées (11) sont stockées dans l'appareil de stockage de pièces (12).

6. Dispositif d'usinage selon l'une quelconque des revendications précédentes, **caractérisé en ce qu'**un appareil de détection (26), en particulier une barrière lumineuse, est prévu sur un côté sortie de l'appareil de stockage de pièces (12) et/ou sur l'unité de convertisseur (16) pour détecter le nombre et/ou la position des pièces disposées (11) sur l'unité de convertisseur (16).

7. Dispositif d'usinage selon l'une quelconque des revendications précédentes, **caractérisé en ce qu'**un appareil d'usinage et/ou un appareil de marquage et/ou un appareil d'identification sont prévus dans la zone de l'unité de convertisseur (16).

8. Dispositif d'usinage selon l'une quelconque des revendications précédentes, **caractérisé en ce qu'**un dispositif intermédiaire de stockage de pièces (20) est prévu en amont de l'appareil d'usinage (14).

9. Dispositif d'usinage selon la revendication 8, **caractérisé en ce qu'**un appareil de transfert (24) est prévu pour transporter les pièces (11) entre l'appareil d'usinage (14) et le dispositif intermédiaire de stockage de pièces (20).

10. Dispositif d'usinage selon l'une quelconque des revendications 8 ou 9, **caractérisé en ce que** le dispositif intermédiaire de stockage de pièces (20) est doté d'un appareil d'extraction (22) pour extraire des pièces (11).

11. Dispositif d'usinage selon l'une quelconque des revendications précédentes, **caractérisé en ce que** le dispositif d'usinage est une machine stationnaire, en particulier une machine CNC.

12. Dispositif d'usinage selon l'une quelconque des revendications précédentes, **caractérisé en ce que** l'appareil de stockage de pièces (12) est déplaçable et peut être disposé sur le dispositif d'usinage (10) de manière automatisée au moyen d'un appareil de transport.

13. Dispositif d'usinage selon l'une quelconque des revendications précédentes, **caractérisé en ce que** le dispositif d'usinage, en particulier l'appareil de stockage de pièces (12), présente une unité de capteur avec laquelle des pièces (11) peuvent être détectées et, en particulier, identifiées dans un plan de l'appareil de stockage de pièces (12).

14. Dispositif d'usinage selon l'une quelconque des revendications précédentes, **caractérisé en ce que** le dispositif d'usinage est doté d'une unité d'extraction pour extraire les pièces de l'unité de convertisseur (16).
